(19) Europäisches Patentamt / European Patent Office / Office européen des brevets

(11) **EP 1 600 328 B1**

# (12) FASCICULE DE BREVET EUROPEEN

(45) Date de publication et mention
de la délivrance du brevet:
**22.10.2008   Bulletin 2008/43**

(51) Int Cl.:
**B60Q 1/12** *(2006.01)*

(21) Numéro de dépôt: **05291091.6**

(22) Date de dépôt: **20.05.2005**

(54) **Dispositif d'éclairage d'un véhicule automobile avec anticipation de la trajectoire**

Fahrzeugscheinwerfer mit Antizipierung des Fahrweges

Headlight system for vehicles with anticipation of the road path

(84) Etats contractants désignés:
**AT BE BG CH CY CZ DE DK EE ES FI FR GB GR HU IE IS IT LI LT LU MC NL PL PT RO SE SI SK TR**

(30) Priorité: **24.05.2004   FR 0405589**

(43) Date de publication de la demande:
**30.11.2005   Bulletin 2005/48**

(73) Titulaire: **VALEO VISION**
**93012 Bobigny Cedex (FR)**

(72) Inventeurs:
• **Herbin, Anne**
**75004 Paris (FR)**
• **Godbillon, Vincent**
**75011 Paris (FR)**

(56) Documents cités:
**EP-A2- 1 193 125          EP-A2- 1 241 049**
**FR-A1- 2 830 491          US-A- 6 049 749**
**US-A1- 2003 067 780**

• **HOGREFE H ET AL: "IMPROVING SAFETY THROUGH ADAPTIVE FORWARD LIGHTING" AUTOMOTIVE ENGINEERING, SOCIETY OF AUTOMOTIVE ENGINEERS. WARRENDALE, US, vol. 105, no. 10, octobre 1997 (1997-10), pages 47-51, XP000722058 ISSN: 0098-2571**

# Description

L'invention concerne en général les dispositifs d'éclairage de véhicules automobiles.

Plus précisément, l'invention concerne selon un premier aspect un dispositif d'éclairage pour véhicule automobile, comprenant au moins un projecteur apte à produire un faisceau lumineux, des moyens pour acquérir une valeur courante d'un paramètre de réglage indicatif de la trajectoire du véhicule, et des moyens d'adaptation pour adapter au moins une caractéristique du faisceau lumineux, par exemple son orientation, sa forme ou son intensité, le dispositif comprenant des moyens pour acquérir un paramètre d'évolution indicatif de l'évolution future de la trajectoire du véhicule, et des moyens pour prédire une valeur future du paramètre de réglage en fonction de sa valeur courante et du paramètre d'évolution, les moyens d'adaptation adaptant ladite caractéristique du faisceau lumineux en fonction de la valeur future dudit paramètre de réglage.

Il est connu de chercher à orienter le faisceau lumineux émis par le projecteur en fonction de la trajectoire du véhicule, c'est-à-dire en fonction du tracé de la route.

On cherche à ce que les projecteurs "suivent" la route, c'est-à-dire qu'ils éclairent droit devant le véhicule lorsque la route est rectiligne, et qu'ils éclairent à l'avant du véhicule, sur la droite ou sur la gauche, lorsque la route forme un virage, respectivement, à droite ou à gauche.

Des dispositifs d'éclairage destinés à suivre la route sont connus. Généralement, ces dispositifs utilisent des informations disponibles sur le véhicule pour déterminer la géométrie de la route. Certains de ces dispositifs intègrent un capteur d'angle au volant qui fournit des informations sur la trajectoire suivie par le véhicule. Dans ce cas, l'éclairage de la route est fonction du comportement du conducteur. Par exemple, si le conducteur tourne le volant du véhicule vers la droite, alors les projecteurs du véhicule sont dirigés vers la droite de la route, en considérant qu'il s'agit d'un virage à droite. Au contraire, si le conducteur ne bouge pas son volant, les projecteurs éclairent droit devant le véhicule. Cependant, un tel dispositif (appelé Bending Light, en termes anglosaxons) présente des retards sur le déclenchement de l'éclairage en virage ce qui se traduit, pour le conducteur, par une sensation d'arrivée tardive du faisceau lumineux en entrée du virage et par un retour trop lent du faisceau lumineux dans l'axe du véhicule en sortie du virage. Ce retard dans le changement d'orientation des projecteurs entraîne, non seulement un manque de confort pour le conducteur, mais aussi un manque de sécurité puisqu'il existe, à chaque changement d'orientation des projecteurs, un instant pendant lequel la route est incorrectement éclairée. En outre, avec ce dispositif l'orientation des projecteurs dépend uniquement du comportement du conducteur. Aussi, si celui-ci donne malencontreusement une impulsion au volant du véhicule, par exemple en se retournant un instant ou en sortant un objet de la boîte à gant, l'orientation des projecteurs est brutalement modifiée alors que la géométrie de la route est identique.

Un autre dispositif d'éclairage connu utilise une information interne au véhicule permettant une certaine anticipation. Par exemple, juste avant la sortie d'un virage, bien que le volant soit toujours à l'angle correspondant à la courbe, il est courant que le conducteur accélère car il est en vue de la sortie du virage et d'une partie de route plus rectiligne que celle qu'il vient de passer. Un tel dispositif utilise cette concordance d'événements pour commencer à rabattre les faisceaux lumineux vers leur position centrale. Par contre, l'information inverse ne peut pas être utilisée. En effet, lorsque le conducteur arrive en vue d'un virage, généralement il freine. Cependant, il n'est pas possible de savoir, à partir simplement du freinage, si le conducteur freine à cause d'un virage à droite ou d'un virage à gauche ou bien parce qu'il y a un obstacle devant lui qui l'oblige à freiner.

D'autres types de dispositifs cherchent à prédire la route qui sera vraisemblablement suivie par le véhicule.

Par exemple, le document US 2003/067780 décrit un dispositif de commande de l'orientation des projecteurs de véhicule, à partir de paramètres tels que l'angle volant, la vitesse de rotation du volant, l'actionnement de l'indicateur de changement de direction, l'accélération ou la décélération.

Le document EP 1 241 049 décrit un dispositif de commande de l'orientation des projecteurs de véhicule, dans lequel l'orientation des projecteurs est une fonction du deuxième degré du rayon de courbure de la route.

Le document FR 2 830 491 décrit un dispositif de commande de l'orientation des projecteurs de véhicule à partir de l'angle volant, de la vitesse angulaire du volant, de l'actionnement de l'indicateur de changement de direction et de la vitesse du véhicule.

Le document EP 1 193 125 décrit un dispositif de commande de l'orientation des projecteurs de véhicule, à partir de l'angle volant et d'une caméra CCD indiquant les contours de la route par suivi des couloirs de circulation.

Le document US 6 049 749 décrit un dispositif de commande de l'orientation des projecteurs de véhicule, à partir d'un calculateur de prédiction recevant des signaux tels que l'actionnement de l'indicateur de changement de direction, l'angle volant, la vitesse et l'accélération du véhicule, et des informations GPS.

Ces types de dispositifs ne permettent donc d'anticiper l'éclairage de la route que dans certains cas seulement.

Dans ce contexte, la présente invention a pour but d'améliorer les solutions existantes.

A cette fin, le dispositif de l'invention, par ailleurs conforme à la définition générique qu'en donne le préambule ci-dessus, est caractérisé en ce que le paramètre de réglage est choisi parmi l'angle au volant, la vitesse de lacet, l'accélération latérale, la vitesse transversale, ou une combinaison de ces paramètres, et en ce que le paramètre d'évolution est choisi parmi la vitesse angulaire du volant, la variation de la vitesse de lacet, la variation de l'accélération latérale, la variation de vitesse transversale, ou une combinaison de ces paramètres.

Le dispositif d'éclairage peut également présenter une ou plusieurs des caractéristiques ci-dessous.

- Les moyens pour acquérir un paramètre d'évolution indicatif de l'évolution future de la trajectoire du véhicule peuvent être constitués d'un capteur apte à mesurer directement ledit paramètre.
- Les moyens pour acquérir un paramètre d'évolution indicatif de l'évolution future de la trajectoire du véhicule peuvent évaluer ledit paramètre en fonction d'autres paramètres dont les valeurs sont disponibles à bord du véhicule.
- Le projecteur peut comprendre une source lumineuse mobile en rotation autour d'au moins un axe, les moyens d'adaptation étant aptes à déplacer la source lumineuse en rotation pour adapter les caractéristiques du faisceau lumineux.
- Le projecteur peut comprendre une pluralité de sources lumineuses alimentées chacune à une puissance électrique qui lui est propre, les moyens d'adaptation étant aptes à faire varier la puissance électrique d'alimentation de chaque source pour adapter les caractéristiques du faisceau lumineux. Dans ce cas, au moins une source lumineuse peut être mobile en rotation autour d'au moins un axe, les moyens d'adaptation étant aptes à déplacer ladite source en rotation pour adapter les caractéristiques du faisceau lumineux.

Selon un second aspect, l'invention concerne une méthode de pilotage d'un dispositif d'éclairage présentant les caractéristiques ci-dessus, cette méthode comprenant au moins les étapes suivantes :

- Acquisition de la valeur courante du paramètre de réglage indicatif de la trajectoire du véhicule,
- Acquisition du paramètre d'évolution indicatif de l'évolution future de la trajectoire du véhicule,
- Prédiction de la valeur future du paramètre de réglage en fonction de sa valeur courante et du paramètre d'évolution,
- Adaptation de ladite caractéristique du faisceau lumineux en fonction de la valeur future dudit paramètre de réglage.

D'autres caractéristiques et avantages de l'invention ressortiront clairement de la description qui en est faite ci-dessous, à titre indicatif et nullement limitatif, en référence aux figures annexées, parmi lesquelles :

- la figure 1 est une représentation schématique de l'avant d'un véhicule équipé d'un dispositif d'éclairage, conforme à un premier mode de réalisation de l'invention,
- la figure 2 est un diagramme fonctionnel du dispositif d'éclairage de la figure 1,
- la figure 3 est une représentation schématique d'un dispositif d'éclairage conforme à un second mode de réalisation de l'invention,
- les figures 4A à 4D sont des représentations graphiques de l'évolution dans le temps de l'angle au volant d'un véhicule, dans des situations de vie correspondant respectivement à un virage à droite, à un virage à gauche, à un enchaînement de virages vers la droite et à un enchaînement de virages vers la gauche,
- la figure 5 est une représentation graphique de l'évolution dans le temps des valeurs courantes (traits pleins) et futures (traits mixtes) du paramètre de réglage du dispositif d'éclairage de la figure 2 ou 3, ce paramètre étant ici l'angle au volant,
- la figure 6 est une représentation graphique de l'évolution dans le temps de l'angle de rotation de la source lumineuse du dispositif de la figure 2, déterminé conformément à l'art antérieur à l'aide des valeurs courantes du paramètre de réglage (traits pleins) et déterminé conformément à l'invention à l'aide des valeurs futures (traits mixtes) du paramètre de réglage, et
- la figure 7 est une vue de dessus d'un véhicule circulant sur une route et du faisceau lumineux produit par son dispositif d'éclairage, le faisceau adapté en fonction de la valeur future $\alpha f$ de l'angle au volant étant représenté en traits pleins, et le faisceau adapté en fonction de la valeur courante $\alpha c$ de l'angle au volant étant représenté en pointillés.

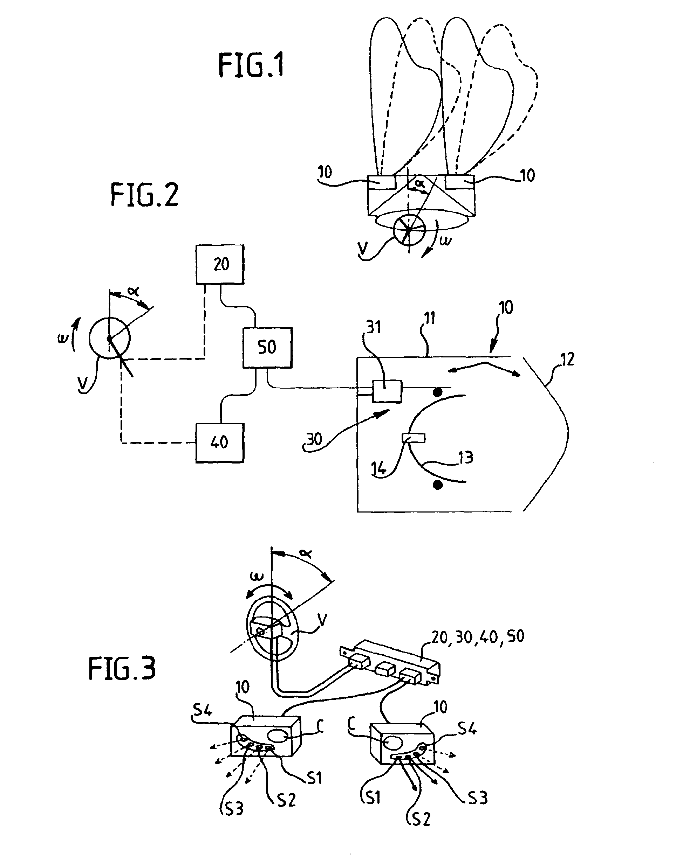

Le véhicule automobile dont l'avant est représenté sur la figure 1 est équipé d'un dispositif d'éclairage comprenant deux projecteurs 10 apte à produire chacun un faisceau lumineux, des moyens 20 pour acquérir une valeur courante d'un paramètre de réglage indicatif de la trajectoire du véhicule, et des moyens d'adaptation 30 pour adapter au moins une caractéristique du faisceau lumineux en fonction de la trajectoire du véhicule.

Les deux projecteurs 10 sont disposés des deux côtés transversaux opposés du véhicule.

Quand le véhicule roule en ligne droite, les projecteurs 10 projettent les faisceaux lumineux droit vers l'avant pour éclairer la route devant le véhicule.

Quand le véhicule suit une courbe, par exemple une courbe tournant à droite suivant le sens de déplacement du véhicule, les moyens d'adaptation 30 modifient le faisceau lumineux des projecteurs 10 pour mieux éclairer la portion de courbe qui va être suivie par le véhicule. Cette adaptation est réalisée en modifiant par exemple son orientation, sa forme ou son intensité, comme on l'expliquera plus loin.

Selon l'invention, le dispositif d'éclairage comprend des moyens 40 pour acquérir un paramètre d'évolution indicatif de l'évolution future de la trajectoire du véhicule, et des moyens 50 pour prédire une valeur future du paramètre de réglage en fonction de sa valeur courante et du paramètre d'évolution, les moyens d'adaptation 30 adaptant ladite caractéristique du faisceau lumineux en fonction de la valeur future dudit paramètre de réglage.

On commande ainsi l'adaptation de faisceau lumineux par anticipation de la trajectoire du véhicule.

Le paramètre de réglage est typiquement l'angle α au volant V du véhicule par rapport à une position angulaire de référence dans laquelle les roues sont orientées suivant la direction longitudinale du véhicule et dans laquelle la trajectoire de ce véhicule est droit vers l'avant. Cet angle au volant α est en correspondance avec l'orientation des roues avant du véhicule et constitue donc une indication précise de la trajectoire courante du véhicule.

Le paramètre de réglage peut également être constitué d'une autre grandeur liée au comportement du véhicule, comme par exemple l'angle des roues directrices par rapport à leur position nominale dans laquelle le véhicule circule en ligne droite, l'accélération latérale du véhicule, ou toute autre grandeur dépendant du comportement du véhicule.

Dans un mode de réalisation préféré de l'invention, le paramètre d'évolution est la vitesse angulaire ω de rotation du volant V. Le paramètre d'évolution peut également être, par exemple, la vitesse angulaire de rotation des roues directrices du véhicule autour de l'axe de la fusée sur laquelle elles sont montées, ou la vitesse de variation de l'accélération latérale du véhicule ou de la vitesse de lacet.

La valeur future αf du paramètre de réglage est alors calculée à l'aide de la formule mathématique suivante :

$$\alpha f = \alpha c + K \times \omega \qquad (1)$$

dans laquelle αc est la valeur courante de l'angle au volant α acquise par les moyens d'acquisition 20, et K est un coefficient numérique représentatif du degré d'anticipation recherché pour l'adaptation du faisceau lumineux.

Ainsi, si le volant V occupe une position angulaire décalée d'un premier côté par rapport à la référence, correspondant par exemple à une valeur courante αc de l'angle au volant α positive, et si le volant V subit une rotation allant vers le même premier côté, correspondant à une vitesse angulaire ω positive, la valeur future αf prise en compte par les moyens d'adaptation 30 pour modifier le faisceau lumineux sera plus grande que la valeur courante αc. Le dispositif d'éclairage anticipe que la rotation du volant V va s'accentuer, que la rotation des roues du véhicule va également s'accentuer, et que le véhicule va donc suivre une courbe encore plus prononcée. Il va donc modifier les caractéristiques du faisceau lumineux pour l'adapter à cette courbe plus prononcée, par anticipation, alors même que le véhicule est toujours dans une partie de la courbe moins prononcée et n'est pas encore entré dans la partie plus prononcée de cette courbe.

De même, si le volant V occupe une position angulaire décalée d'un premier côté par rapport à la référence, correspondant par exemple à une valeur courante αc de l'angle au volant α positive, et si le volant V subit une rotation allant d'un côté opposé, correspondant à une vitesse angulaire ω négative, la valeur future αf prise en compte par les moyens d'adaptation 30 pour modifier le faisceau lumineux sera plus petite que la valeur courante αc. Le dispositif d'éclairage anticipe que la rotation du volant V va diminuer, que la rotation des roues du véhicule va également diminuer, et que le véhicule va donc suivre une courbe moins prononcée. Il va modifier les caractéristiques du faisceau lumineux pour l'adapter à cette courbe moins prononcée, par anticipation.

Le coefficient K peut être constant, et est dans ce cas compris entre 0,1 et 0,6 secondes. En dessous de 0,1 seconde, l'effet d'anticipation obtenu n'est pas suffisant. Au-dessus de 0,6 secondes, l'effet d'anticipation obtenu est au contraire trop important et conduit à des effets indésirables.

Le coefficient K peut également varier par paliers en fonction de la valeur de paramètres disponibles à bord du véhicule. Le besoin d'anticipation du conducteur du véhicule varie en effet en fonction des situations de vie du véhicule.

On distingue les situations de vie suivantes.

A/ Entrée d'un virage à droite : α >0, ω >0
B/ Arrivée dans la partie du virage à droite de courbure constante : α >0, α élevé, ω >0
C/ Sortie de la partie du virage à droite de courbure constante : α >0, α élevé, ω <0
D/ Sortie d'un virage à droite : α >0, ω <0
E/ Entrée d'un virage à gauche: α <0, ω <0
F/ Arrivée dans la partie du virage à gauche de courbure constante : α <0, valeur absolue de α élevée, ω <0
G/ Sortie de la partie du virage à gauche de courbure constante : α <0, valeur absolue de α élevée, ω >0
H/ Sortie d'un virage à gauche: α <0, ω >0
I/ Enchaînement de virages vers la droite : α <0, ω >0, ω élevé
J/ Enchaînement de virages vers la gauche: α >0, ω <0, valeur absolue de ω élevée

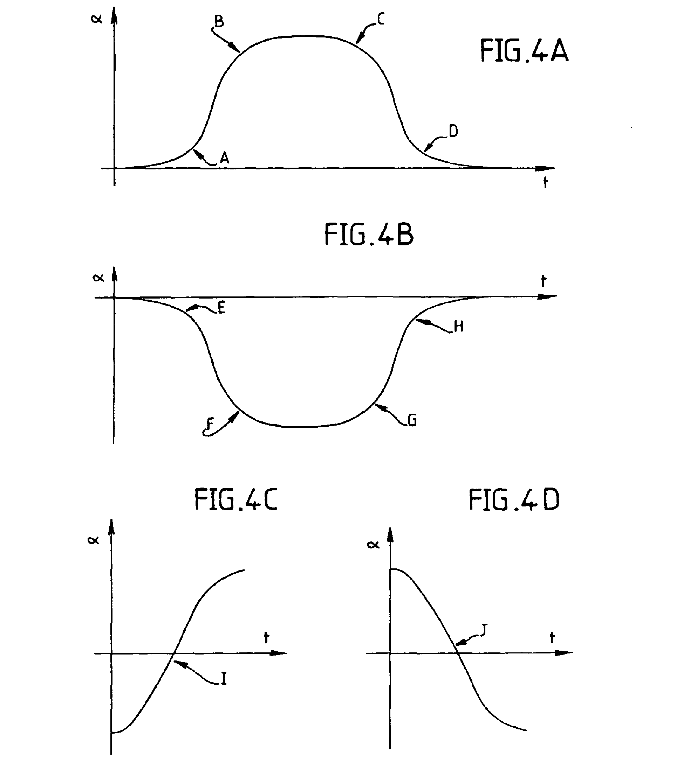

Les situations A/ à D/ sont représentées sur la figure 4A, E/ à H/ sur la figure 4B, I/ et J/ respectivement sur les figures 4C et 4D.
Pour les situations A/, C/, E/ et G/, on choisit le coefficient K entre 0,4 et 0,8 secondes. Pour les situations B/, D/, F/, H/, I/ et J/, on choisit le coefficient K entre 0,1 et 0,5 secondes.

Quand le coefficient K varie par paliers, on observe des effets de transition lors du passage d'un palier à un autre, qui se traduisent par des variations brutales des caractéristiques des faisceaux lumineux qui peuvent être gênantes.

Pour s'affranchir de cette difficulté, on peut prévoir que le coefficient K varie de façon continue en fonction de la valeur d'un ou plusieurs paramètres disponibles à bord du véhicule.

Le coefficient K peut dans ce cas être fonction de l'angle au volant $\alpha$, de la vitesse angulaire $\omega$ et/ou de l'accélération angulaire du volant V, de la vitesse et/ou de l'accélération du véhicule, de l'accélération latérale $\gamma t$ et/ou de la variation d'accélération latérale $\Delta\gamma t$ dans un intervalle de temps déterminé, de la vitesse de lacet $\psi$ et/ou de l'accélération de lacet, de l'indice de courbure de la route et/ou de la variation de cet indice, de l'utilisation par le conducteur de l'accélérateur et/ou du frein, de l'utilisation par le conducteur de l'indicateur de direction, des changements de rapports de vitesses et de la durée des changements de rapport.

On notera que le paramètre d'évolution peut être un autre paramètre donnant une indication sur l'évolution future de la trajectoire du véhicule, différent de la vitesse angulaire $\omega$ du volant V. Ce paramètre peut être la vitesse de lacet $\psi$ du véhicule ou l'accélération de lacet, l'accélération latérale $\gamma t$ du véhicule, la variation d'accélération latérale $\Delta\gamma t$ dans un intervalle de temps déterminé, la variation de la vitesse transversale du véhicule $\Delta Vt$ dans un intervalle de temps déterminé.

Le paramètre d'évolution peut également être une combinaison des paramètres mentionnés ci-dessus.

Les moyens 40 pour acquérir le paramètre d'évolution peuvent être constitués d'un capteur apte à mesurer directement ledit paramètre. En fonction du paramètre retenu, ce capteur sera un capteur de vitesse de rotation du volant ou de la colonne de direction du véhicule, un capteur de vitesse de lacet, un capteur d'accélération latérale ou un capteur de vitesse transversale.

Les moyens 40 pour acquérir le paramètre d'évolution peuvent également comprendre un calculateur apte à évaluer ledit paramètre en fonction d'autres paramètres dont les valeurs sont disponibles à bord du véhicule.

Ainsi, si le paramètre d'évolution est la vitesse de lacet $\psi$, cette vitesse peut être calculée à partir de la mesure de l'accélération latérale $\gamma t$ et/ou de la vitesse transversale Vt. De même, l'accélération latérale $\gamma t$ peut être calculée à partir de la vitesse de lacet $\psi$ et/ou de la vitesse transversale Vt.

Dans un premier mode de réalisation du dispositif d'éclairage de l'invention représenté sur la figure 2, le projecteur 10 comprend un boîtier 11 ouvert d'un côté avant, une optique 12 fermant le côté avant du boîtier 11, un réflecteur 13 disposé dans le boîtier 11 présentant la forme d'une demi-coquille ouverte vers l'avant, et une source lumineuse 14 solidaire du réflecteur 13 et disposé à l'intérieur de ce réflecteur.

Le réflecteur 13 et la source lumineuse 14 sont conjointement mobiles en rotation autour d'un axe vertical à l'intérieur du boîtier 11, les moyens d'adaptation 30 comprenant des moyens pour déplacer le réflecteur 13 et la source lumineuse 14 en rotation pour adapter les caractéristiques du faisceau lumineux.

Dans ce cas, l'adaptation du faisceau lumineux se fait en changeant son orientation.

La rotation du réflecteur et de la source mobile est une fonction de la valeur future $\alpha f$ de l'angle au volant.

De manière générale, le faisceau lumineux du projecteur est orienté sensiblement longitudinalement quand le véhicule se déplace en ligne droite, pivote vers la droite dans une courbe à droite suivant le sens de déplacement du véhicule et pivote vers la gauche dans une courbe à gauche.

Les moyens d'adaptation 30 comprennent un moteur 31 muni d'un arbre de sortie longitudinal fileté, et un écrou dans lequel l'arbre est engagé, cet écrou étant lié au réflecteur 13 par une liaison rotule.

Le moteur 31 est piloté par un calculateur, ce calculateur constituant par ailleurs les moyens de prédiction 50. Ce calculateur, comme le montre la figure 2, reçoit les informations venant des moyens 20 d'acquisition du paramètre de réglage et des moyens 40 d'acquisition du paramètre d'évolution.

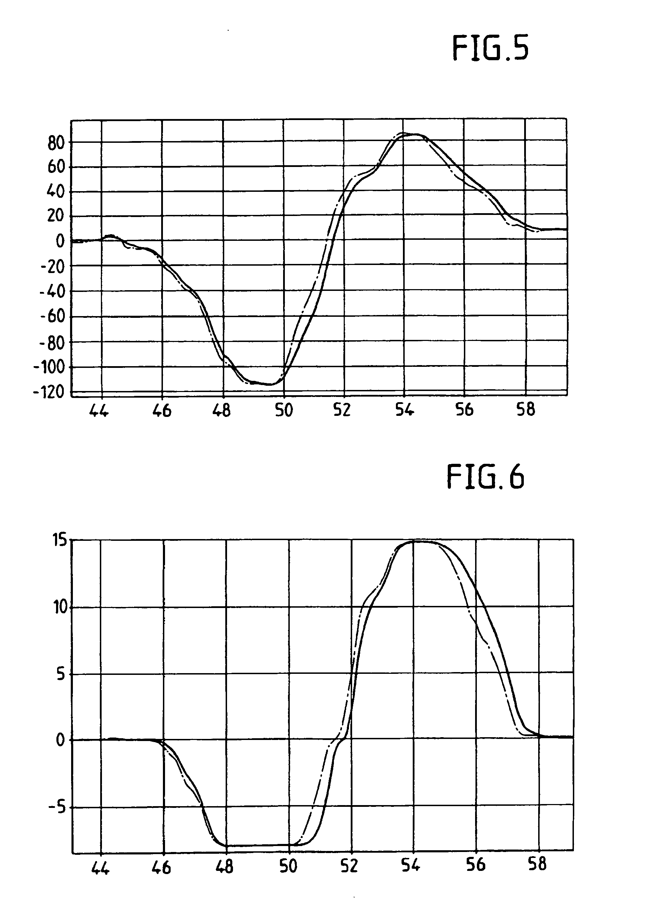

Les figures 5 et 6 illustrent les résultats obtenus à l'aide du dispositif d'éclairage selon le premier mode de réalisation.

La figure 5 représente en fonction du temps la valeur courante $\alpha c$ de l'angle au volant mesuré par les moyens d'acquisition 20, et la valeur future $\alpha f$ de l'angle au volant déterminée par les moyens de prédiction 50 à l'aide de l'équation (1) à partir de la valeur courante $\alpha c$. Le temps, en abscisse, est exprimé en seconde, et les angles, en ordonnée, sont exprimés en degrés.

Ces courbes correspondent à une trajectoire du véhicule comprenant d'abord une ligne droite, puis à partir de 44 secondes un virage à gauche (angles négatifs), puis un virage à droite (angles positifs) et enfin une autre ligne droite à partir de 58 secondes environ.

On voit nettement que la valeur future $\alpha f$ de l'angle au volant anticipe la valeur courante $\alpha c$, d'une durée pouvant atteindre 200 millisecondes.

La figure 6 représente en fonction du temps l'orientation des faisceaux lumineux des projecteurs 10, dans le cas où cette orientation est déterminée conformément à l'invention par les moyens d'adaptation 30 à partir de la valeur future $\alpha f$ de l'angle au volant, et dans un cas hypothétique où les moyens d'adaptation 30 utilisent la valeur courante $\alpha c$ de l'angle au volant à la place de la valeur future $\alpha f$ pour déterminer l'orientation des faisceaux lumineux.

Ces courbes correspondent à la même trajectoire du véhicule que sur la figure 4. Le temps, en abscisse, est exprimé en seconde, et l'orientation des faisceaux lumineux, en ordonnée, est exprimée en degrés.

L'orientation du faisceau lumineux est de 0° quand les faisceaux sont dirigés droit devant le véhicule, cette orientation pouvant varier de 15° vers la droite et de 8° vers la gauche au maximum.

Comme précédemment, on constate que l'orientation déterminée à partir de la valeur future αf est en avance par rapport à l'orientation déterminée à partir de la valeur courante αc. L'écart entre les courbes est de 3,5° au changement de virage, c'est-à-dire vers 51,5 secondes quand l'orientation passe à zéro entre les deux virages. L'écart est de 2,7° en sortie du second virage, vers 57 secondes.

Dans un second mode de réalisation, correspondant à la figure 3, chaque projecteur 10 comprend un boîtier et une pluralité de sources lumineuses C, S1, S2, S3 et S4 alimentées chacune à une puissance électrique qui lui est propre, montées fixes dans le boîtier.

La source C correspond aux feux de croisement du véhicule et produit un faisceau lumineux orienté sensiblement longitudinalement vers l'avant.

Les sources S1 à S4 sont utilisées en courbe et sont disposées les unes à côté des autres, dans un alignement transversal. Ils produisent des faisceaux lumineux d'orientation d'autant plus inclinée vers l'extérieur du véhicule par rapport à la direction longitudinale que la source est située vers l'extérieur du véhicule. Ainsi, la source S1 située le plus à l'intérieur du véhicule produit le faisceau le moins incliné, et la source S4 située le plus à l'extérieur du véhicule produit le faisceau le moins incliné.

Le faisceau lumineux du projecteur 10 est constitué par la combinaison des faisceaux individuels de chaque source C, et S1 à S4.

Les moyens d'adaptation 30 sont aptes à faire varier la puissance électrique d'alimentation de chaque source S1 à S4 pour adapter les caractéristiques du faisceau lumineux du projecteur 10, en fonction de la valeur future αf de l'angle au volant.

Quand le véhicule se déplace en ligne droite, les sources S1 à S4 sont toutes éteintes. Quand la valeur future αf augmente, les sources S1 à S4 sont progressivement mise en service, dans cet ordre, et leur puissance électrique d'alimentation augmente progressivement. Ainsi, pour des valeurs futures αf faibles, seule la source S1 est alimentée électriquement. Pour des valeurs futures αf relativement plus grandes, la source S2 est alimentée en plus de la source S1 et la puissance électrique alimentant la source S1 augmente. Pour des valeurs futures encore plus grandes, la source S3 est alimentée en plus des sources S1 et S2, et les puissances électriques d'alimentation des sources S1 et S2 augmentent encore.

On fait ainsi varier la forme et l'intensité du faisceau électrique des projecteurs 10 en fonction de la valeur future αf de l'angle au volant.

Les moyens de prédiction 50 sont constitués d'un calculateur recevant les informations des moyens 20 d'acquisition du paramètre de réglage et des moyens 40 d'acquisition du paramètre d'évolution, et pilotent les moyens d'adaptation 30.

Dans une variante du second mode de réalisation, au moins une source lumineuse S1 à S4 est mobile en rotation autour d'au moins un axe, les moyens d'adaptation 30 étant aptes à déplacer ladite source en rotation pour adapter les caractéristiques du faisceau lumineux.

L'adaptation du faisceau lumineux du projecteur 10 en fonction de la valeur future αf de l'angle au volant se fait donc à la fois en faisant varier les puissances électriques d'alimentation des sources S1 à S4 et/ou en faisant pivoter la ou les sources mobiles.

Le dispositif d'éclairage décrit ci-dessus peut présenter de multiples variations sans sortir du cadre de l'invention.

Ainsi, seul le faisceau lumineux du projecteur situé d'un côté intérieur de la courbe peut être adapté en fonction de la valeur future αf de l'angle au volant.

Au contraire, les faisceaux lumineux des deux projecteurs peuvent être adaptés en fonction de la valeur future αf de l'angle au volant. Dans le premier mode de réalisation de l'invention, ces faisceaux sont par exemple tous deux orientés à droite dans une courbe à droite et à gauche dans une courbe à gauche.

Dans le premier mode de réalisation, les moyens d'adaptation peuvent comporter des dispositifs différents de l'ensemble vis sans fin/écrou pour faire pivoter le réflecteur 13. L'entraînement peut être réalisé directement par des pignons ou par une crémaillère coopérant avec un pignon solidaire de l'arbre de sortie du moteur.

Le paramètre de réglage peut ne pas être l'angle au volant α, ou prendre en compte aussi d'autres éléments : ce paramètre peut être l'angle de la colonne de direction ou l'angle de roue. Il peut être également constitué d'un indicateur calculé à partir d'une ou plusieurs des variables suivantes : l'angle au volant, l'angle de la colonne de direction, l'angle de roue, la vitesse longitudinale du véhicule, la vitesse transversale du véhicule, la vitesse de lacet, l'accélération longitudinale du véhicule, l'accélération latérale du véhicule.

La formule (1) peut être remplacée par une autre formule analogue permettant de déterminer une valeur future du paramètre de réglage en fonction de la valeur courante. Cette formule peut prendre en compte un paramètre d'évolution unique mais peut aussi intégrer plusieurs paramètres d'évolution différents.

Dans le second mode de réalisation, le nombre de sources lumineuses de chaque projecteur peut être supérieur ou inférieur à cinq.

On comprend donc bien que le dispositif d'éclairage décrit ci-dessus présente de multiples avantages :

Il permet d'adapter le faisceau lumineux des projecteurs par anticipation.

Dans le premier mode de réalisation, le changement d'orientation du faisceau n'est pas seulement fonction de l'angle au volant. L'évolution du virage est déjà prise en compte, ce qui permet d'accroître le pivotement de ce faisceau si la courbe va en s'accentuant, et de réduire le pivotement dans le cas contraire.

Le dispositif d'éclairage répond donc à l'attente du conducteur en anticipant sur la trajectoire du véhicule. Dans l'art antérieur au contraire l'adaptation du faisceau lumineux était suiveuse, ce qui était désagréable pour le conducteur.

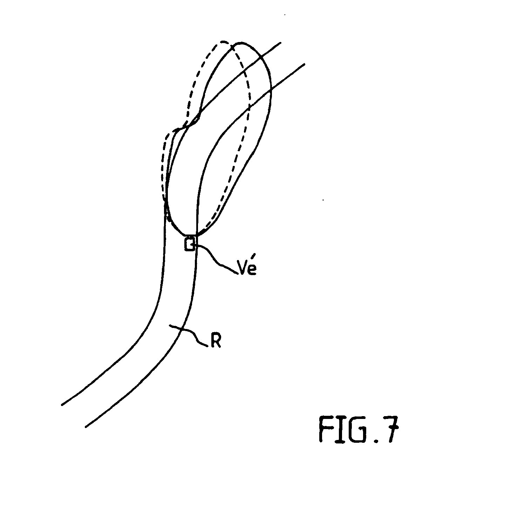

Comme le montre la figure 7, l'anticipation de l'adaptation du faisceau lumineux permet d'augmenter la distance de visibilité dans le virage à venir, typiquement de 10 mètres.

Le choix de la vitesse angulaire de rotation du volant comme paramètre d'évolution est particulièrement avantageux car ce paramètre est en avance temporelle sur tous les autres.

Enfin, l'invention s'adapte à la fois à un dispositif d'éclairage à sources lumineuses pivotantes (notamment la fonction dite DBL ou « Dynamic Bending light en anglais ») et à sources lumineuses fixes (notamment la fonction dite FBL pour « Fixed Bending Light » en anglais).

## Revendications

1. Dispositif d'éclairage pour véhicule automobile, comprenant au moins un projecteur (10) apte à produire un faisceau lumineux, des moyens (20) pour acquérir une valeur courante ($\alpha$c) d'un paramètre de réglage ($\alpha$) indicatif de la trajectoire du véhicule, et des moyens d'adaptation (30) pour adapter au moins une caractéristique du faisceau lumineux, par exemple son orientation, sa forme ou son intensité, le dispositif comprenant des moyens (40) pour acquérir un paramètre d'évolution ($\omega$, $\psi$, $\gamma$t, $\Delta\gamma$t, Vt, $\Delta$Vt) indicatif de l'évolution future de la trajectoire du véhicule, et des moyens (50) pour prédire une valeur future ($\alpha$f) du paramètre de réglage en fonction de sa valeur courante ($\alpha$c) et du paramètre d'évolution, les moyens d'adaptation (30) adaptant ladite caractéristique du faisceau lumineux en fonction de la valeur future ($\alpha$f) dudit paramètre de réglage, **caractérisé en ce que** le paramètre de réglage est choisi parmi l'angle au volant ($\alpha$), la vitesse de lacet ($\psi$), l'accélération latérale ($\gamma$t), la vitesse transversale (Vt), ou une combinaison de ces paramètres, **et en ce que** le paramètre d'évolution est choisi parmi la vitesse angulaire ($\omega$) du volant (V), la variation de la vitesse de lacet ($\Delta\psi$), la variation de l'accélération latérale ($\Delta\gamma$t), la variation de vitesse transversale ($\Delta$Vt), ou une combinaison de ces paramètres.

2. Dispositif selon la revendication précédente, **caractérisé en ce que** les moyens (40) pour acquérir un paramètre d'évolution indicatif de l'évolution future de la trajectoire du véhicule sont constitués d'un capteur apte à mesurer directement ledit paramètre.

3. Dispositif selon l'une quelconque des revendications précédentes, **caractérisé en ce que** le projecteur (10) comprend une source lumineuse (14) associée à un réflecteur (13) et mobile en rotation autour d'au moins un axe, les moyens d'adaptation (30) étant aptes à déplacer le réflecteur (13) en rotation pour adapter les caractéristiques du faisceau lumineux.

4. Dispositif selon l'une quelconque des revendications précédentes, **caractérisé en ce que** le projecteur (10) comprend une pluralité de sources lumineuses (C,S1, S2, S3, S4) alimentées chacune à une puissance électrique qui lui est propre, les moyens d'adaptation (30) étant aptes à faire varier la puissance électrique d'alimentation d'au moins une source (C,S1, S2, S3, S4) pour adapter les caractéristiques du faisceau lumineux.

5. Dispositif selon la revendication 4, **caractérisé en ce qu'**au moins une source lumineuse (C,S1, S2, S3, S4) est mobile en rotation autour d'au moins un axe, les moyens d'adaptation (30) étant aptes à déplacer ladite source (C,S1, S2, S3, S4) en rotation pour adapter les caractéristiques du faisceau lumineux.

6. Procédé de pilotage d'un dispositif d'éclairage automobile comprenant au moins les étapes suivantes :

   - Acquisition de la valeur courante ($\alpha$c, $\psi$, $\gamma$t, Vt) du paramètre de réglage indicatif de la trajectoire du véhicule,
   - Acquisition du paramètre d'évolution ($\omega$, $\Delta\psi$, $\Delta\gamma$t, $\Delta$Vt) indicatif de l'évolution future de la trajectoire du véhicule,
   - Prédiction de la valeur future ($\alpha$f) du paramètre de réglage en fonction de sa valeur courante ($\alpha$c) et du paramètre d'évolution ($\omega$, $\psi$, $\gamma$t, Vt, $\Delta\psi$, $\Delta\gamma$t, $\Delta$Vt),
   - Adaptation de ladite caractéristique du faisceau lumineux en fonction de la valeur future ($\alpha$f) dudit paramètre de réglage.

7. Procédé de pilotage d'un dispositif d'éclairage selon la revendication 6, **caractérisé en ce que** la valeur courante de paramètre de réglage acquise est la valeur courante ($\alpha$c) de l'angle au volant ($\alpha$), **en ce que** ledit paramètre d'évolution est la vitesse angulaire (w) du volant et **en ce que** l'étape de prédiction de la valeur future ($\alpha$f) de l'angle au volant ($\alpha$) est effectuée en calculant la valeur future ($\alpha$f) de l'angle au volant ($\alpha$) à partir de la formule suivante :

$$\alpha f = \alpha c + K \times \omega$$

dans laquelle K est un coefficient numérique représentatif du degré d'anticipation recherché pour l'adaptation du faisceau lumineux.

**8.** Procédé de pilotage d'un dispositif d'éclairage selon la revendication 7, **caractérisé en ce que** le coefficient K représentatif du degré d'anticipation recherché est constant et est compris entre 0,1 et 0,6 secondes.

**9.** Procédé de pilotage d'un dispositif d'éclairage selon la revendication 7, **caractérisé en ce que** le coefficient K représentatif du degré d'anticipation recherché varie en fonction de la valeur d'au moins un paramètre disponible à bord du véhicule.

**10.** Procédé de pilotage d'un dispositif d'éclairage selon la revendication 9, **caractérisé en ce que** le ou les paramètre(s) disponible(s) à bord du véhicule en fonction du ou desquels le coefficient K représentatif du degré d'anticipation peut varier, est ou sont choisi(s) parmi : l'angle au volant ($\alpha$), la vitesse angulaire ($\omega$) et/ou l'accélération angulaire du volant (V), la vitesse et/ou l'accélération du véhicule, l'accélération latérale ($\gamma$t) et/ou la variation d'accélération latérale ($\Delta\gamma$t) dans un intervalle de temps déterminé, la vitesse de lacet ($\psi$) et/ou l'accélération de lacet, l'indice de courbure de la route et/ou la variation de cet indice, l'utilisation par le conducteur de l'accélérateur et/ou du frein, l'utilisation par le conducteur de l'indicateur de direction, les changements de rapports de vitesses et la durée des changements de rapport.

**11.** Véhicule notamment de type automobile, **caractérisé en ce qu'il** comporte un dispositif d'éclairage selon l'une quelconque des revendications 1 à 5 **ou en ce qu'il** utilise le procédé selon l'une quelconque des revendications 6 à 10.

**Claims**

**1.** Lighting device for a motor vehicle, comprising at least one headlight (10) which can produce a light beam, means (20) for acquiring a current value ($\alpha$c) of an adjustment parameter ($\alpha$) which is indicative of the trajectory of the vehicle, and adaptation means (30) in order to adapt at least one characteristic of the light beam, for example its orientation, its form or its intensity, the device comprising means (40) for acquiring an evolution parameter ($\omega$, $\psi$, $\gamma$t, $\Delta\gamma$t, Vt, $\Delta$Vt) which is indicative of the future evolution of the trajectory of the vehicle, and means (50) for predicting a future value ($\alpha$f) of the adjustment parameter according to its current value ($\alpha$c) and the evolution parameter, the adaptation means (30) adapting the said characteristic of the light beam according to the future value ($\alpha$f) of the said adjustment parameter, **characterised in that** the adjustment parameter is selected from amongst the angle on the steering wheel ($\alpha$), the yaw speed ($\psi$), the lateral acceleration ($\gamma$t), the transverse speed (Vt), or a combination of these parameters, and **in that** the evolution parameter is selected from amongst the angular speed ($\omega$) of the steering wheel (V), the variation of the yaw speed ($\Delta\psi$), the variation of the lateral acceleration ($\Delta\gamma$t), the variation of the transverse speed ($\Delta$Vt), or a combination of these parameters.

**2.** Device according to the preceding claim, **characterised in that** the means (40) for acquiring an evolution parameter which is indicative of the future evolution of the trajectory of the vehicle consist of a sensor which can measure the said parameter directly.

**3.** Device according to either of the preceding claims, **characterised in that** the headlight (10) comprises a source of light (14) which is associated with a reflector (13) and is mobile in rotation around at least one axis, the adaptation means (30) being able to displace the reflector (13) in rotation in order to adapt the characteristics of the light beam.

**4.** Device according to any one of the preceding claims, **characterised in that** the headlight (10) comprises a plurality of sources of light (C, S1, S2, S3, S4) which are each supplied with electric power which is specific to them, the adaptation means (30) being able to vary the electric supply power of at least one source (C, S1, S2, S3, S4) in order to adapt the characteristics of the light beam.

**5.** Device according to claim 4, **characterised in that** at least one source of light (C, S1, S2, S3, S4) is mobile in rotation around at least one axis, the adaptation means (30) being able to displace the said source (C, S1, S2, S3, S4) in rotation in order to adapt the characteristics of the light beam.

**6.** Method for controlling a motor vehicle lighting device comprising at least the following steps:

- Acquisition of the current value ($\alpha$c, $\psi$, $\gamma$t, Vt) of the adjustment parameter indicative of the trajectory of the vehicle;
- Acquisition of the evolution parameter ($\omega$, $\Delta\psi$, $\Delta\gamma$t, $\Delta$Vt) indicative of the future evolution of the trajectory of the vehicle;
- Prediction of the future value ($\alpha$f) of the adjustment parameter according to its current value ($\alpha$c) and the evolution parameter ($\omega$, $\psi$, $\gamma$t, Vt, $\Delta\psi$, $\Delta\gamma$t, $\Delta$Vt); and
- Adaptation of the said characteristic of the light beam according to the future value ($\alpha$f) of the said adjustment parameter.

**7.** Method for controlling a lighting device according to claim 6, **characterised in that** the current value of the adjustment parameter acquired is the current value (αc) of the angle on the steering wheel (α), **in that** the said evolution parameter is the angular speed (ω) of the steering wheel, and **in that** the step of prediction of the future value (αf) of the angle on the steering wheel (α) is carried out by calculating the future value (αf) of the angle on the steering wheel (α) on the basis of the following formula:

$$\alpha f = \alpha c + K \times \omega$$

wherein K is a numerical coefficient representative of the degree of anticipation sought for the adaptation of the light beam.

8. Method for controlling a lighting device according to claim 7, **characterised in that** the coefficient K which is representative of the degree of anticipation sought is constant, and is contained between 0.1 and 0.6 seconds.

9. Method for controlling a lighting device according to claim 7, **characterised in that** the coefficient K which is representative of the degree of anticipation sought varies according to the value of at least one parameter available on board the vehicle.

10. Method for controlling a lighting device according to claim 9, **characterised in that** the parameter(s) available on board the vehicle according to which the coefficient K which is representative of the degree of anticipation can vary, is/are selected from amongst the angle on the steering wheel (α), the angular speed (ω) and/or the angular acceleration of the steeling wheel (V), the speed and/or acceleration of the vehicle, the lateral acceleration (γt) and/or the lateral acceleration variation (Δγt) in a predetermined interval of time, the yaw speed (ψ) and/or the yaw acceleration, the index of curvature of the road and/or the variation of this index, the use by the driver of the accelerator and/or of the brake, the use by the driver of the direction indicator, the changes of speed ratios and the duration of the changes of ratio.

11. Vehicle, in particular of the motor vehicle type, **characterised in that** it comprises a lighting device according to any one of claims 1 to 5, or **in that** it uses the method according to any one of claims 6 to 10.

**Patentansprüche**

1. Beleuchtungsvorrichtung für Kraftfahrzeuge, mit wenigstens einem Scheinwerfer (10), der ein Lichtbündel zu erzeugen vermag, Mitteln (20) zum Erlangen eines aktuellen Wertes (αc) eines den Fahrweg des Fahrzeugs angebenden Einstellparameters (α) und Anpassungsmitteln (30) zum Anpassen wenigstens eines Merkmals des Lichtbündels, zum Beispiel seine Ausrichtung, seine Form oder seine Intensität, wobei die Vorrichtung Mittel (40) zum Erlangen eines die künftige Veränderung des Fahrwegs des Fahrzeugs angebenden Veränderungsparameters (ω, ψ, γt, Δγt, Vt, ΔVt) umfasst, und Mitteln (50) zum Vorhersagen eines künftigen Wertes (αf) des Einstellparameters in Abhängigkeit von seinem aktuellen Wert (αc) und dem Veränderungsparameter, wobei die Anpassungsmittel (30) das Merkmal des Lichtbündels in Abhängigkeit des künftigen Wertes (αf) des Einstellparameters anpassen, **dadurch gekennzeichnet, dass** der Einstellparameter gewählt ist aus dem Lenkradwinkel (α), der Giergeschwindigkeit (ψ), der Querbeschleunigung (γt), der Quergeschwindigkeit (Vt) oder einer Kombination dieser Parameter, und dass der Veränderungsparameter gewählt ist aus der Winkelgeschwindigkeit (ω) des Lenkrads (V), der Veränderung der Giergeschwindigkeit (Δψ), der Veränderung der Querbeschleunigung (Δγt), der Veränderung der Quergeschwindigkeit (ΔVt) oder einer Kombination dieser Parameter.

2. Vorrichtung nach dem vorhergehenden Anspruch, **dadurch gekennzeichnet, dass** die Mittel (40) zum Erlangen eines die künftige Veränderung des Fahrwegs des Fahrzeugs angebenden Veränderungsparameters durch einen Sensor gebildet sind, der diesen Parameter unmittelbar zu messen vermag.

3. Vorrichtung nach einem der vorhergehenden Ansprüche, **dadurch gekennzeichnet, dass** der Scheinwerfer (10) eine einem Reflektor (13) zugeordnete Lichtquelle (14) umfasst, die um wenigstens eine Achse herum drehbeweglich ist, wobei die Anpassungsmittel (30) den Reflektor (13) mit einer Drehbewegung zu verlagern vermögen, um die Merkmale des Lichtbündels anzupassen.

4. Vorrichtung nach einem der vorhergehenden Ansprüche, **dadurch gekennzeichnet, dass** der Scheinwerfer (10) eine Vielzahl von Lichtquellen (C, S1, S2, S3, S4) umfasst, die jeweils mit einer für sie geeigneten elektrischen Leistung gespeist werden, wobei die Anpassungsmittel (30) die elektrische Speiseleistung von wenigstens einer Lichtquelle (C, S1, S2, S3, S4) zu ändern vermögen, um die Merkmale des Lichtbündels anzupassen.

5. Vorrichtung nach Anspruch 4, **dadurch gekennzeichnet, dass** wenigstens eine Lichtquelle (C, S1, S2, S3, S4) um wenigstens eine Achse herum drehbeweglich ist, wobei die Anpassungsmittel (30) die Lichtquelle (C, S1, S2, S3, S4) mit einer Drehbewegung zu verlagern vermögen, um die Merkmale des Lichtbündels anzupassen.

**6.** Verfahren zum Steuern einer Kraftfahrzeugbeleuchtungsvorrichtung, das wenigstens die folgenden Schritte umfasst:

- Erlangen des aktuellen Wertes ($\alpha c$, $\psi$, $\gamma t$, Vt) des den Fahrweg des Fahrzeugs angebenden Einstellparameters,
- Erlangen des die künftige Veränderung des Fahrwegs des Fahrzeugs angebenden Veränderungsparameters ($\omega$, $\Delta\psi$, $\Delta\gamma t$, $\Delta$Vt)
- Vorhersage des künftigen Wertes ($\alpha f$) des Einstellparameters in Abhängigkeit seines aktuellen Wertes ($\alpha c$) und des Veränderungsparameters ($\omega$, $\psi$, $\gamma t$, Vt, $\Delta\psi$, $\Delta\gamma t$, $\Delta$Vt),
- Anpassen des Merkmals des Lichtbündels in Abhängigkeit vom künftigen Wert ($\alpha f$) des Einstellparameters.

**7.** Verfahren zum Steuern einer Beleuchtungsvorrichtung nach Anspruch 6,
**dadurch gekennzeichnet, dass** der erlangte aktuelle Einstellparameterwert der aktuelle Wert ($\alpha c$) des Lenkradwinkels ($\alpha$) ist, dass der Veränderungsparameter die Winkelgeschwindigkeit ($\omega$) des Lenkrads ist, und dass der Schritt zur Vorhersage des künftigen Wertes ($\alpha f$) des Lenkradwinkels ($\alpha$) durch Berechnung des künftigen Wertes ($\alpha f$) des Lenkradwinkels ($\alpha$) auf der Grundlage der folgenden Formel erfolgt:

$$\alpha f = \alpha c + K \times \omega$$

wobei K ein numerischer Koeffizient ist, der für den zur Anpassung des Lichtbündels angestrebten Vorwegnahmegrad repräsentativ ist.

**8.** Verfahren zum Steuern einer Beleuchtungsvorrichtung nach Anspruch 7,
**dadurch gekennzeichnet, dass** der für den angestrebten Vorwegnahmegrad repräsentative Koeffizient K konstant ist und zwischen 0,1 und 0,6 Sekunden liegt.

**9.** Verfahren zum Steuern einer Beleuchtungsvorrichtung nach Anspruch 7,
**dadurch gekennzeichnet, dass** der für den angestrebten Vorwegnahmegrad repräsentative Koeffizient K in Abhängigkeit vom Wert wenigstens eines an Bord des Fahrzeugs verfügbaren Wertes variiert.

**10.** Verfahren zum Steuern einer Beleuchtungsvorrichtung nach Anspruch 9,

**dadurch gekennzeichnet, dass** der bzw. die an Bord des Fahrzeugs verfügbaren Parameter, in Abhängigkeit dessen bzw. derer der für den Vorwegnahmegrad repräsentative Koeffizient K variieren kann, gewählt ist bzw. sind aus: dem Lenkradwinkel ($\alpha$), der Winkelgeschwindigkeit ($\omega$) und/oder der Winkelbeschleunigung des Lenkrads (V), der Geschwindigkeit und/oder der Beschleunigung des Fahrzeugs, der Querbeschleunigung ($\gamma t$) und/oder der Veränderung der Querbeschleunigung ($\Delta\gamma t$) innerhalb eines bestimmten Zeitraums, der Giergeschwindigkeit ($\psi$) und/oder der Gierbeschleunigung, dem Krümmungsindex der Straße und/oder der Veränderung dieses Indexes, der Betätigung des Gaspedals oder der Bremse durch den Fahrer, der Betätigung des Blinkers durch den Fahrer, dem Wechseln der Gänge und der Dauer dieser Gangwechsel.

**11.** Fahrzeug, insbesondere vom Typ Kraftfahrzeug,
**dadurch gekennzeichnet, dass** es eine Beleuchtungsvorrichtung nach einem der Ansprüche 1 bis 5 umfasst, oder dass es das Verfahren nach einem der Ansprüche 6 bis 10 anwendet.

FIG.1

FIG.2

FIG.3

FIG.4A

FIG.4B

FIG.4C

FIG.4D

## FIG.5

## FIG.6

FIG.7

**EP 1 600 328 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003067780 A
- EP 1241049 A
- FR 2830491
- EP 1193125 A
- US 6049749 A